# EUROPÄISCHE PATENTSCHRIFT

(11) **EP 2 782 716 B1**
(45) Veröffentlichungstag und Bekanntmachung des Hinweises auf die Patenterteilung: **21.08.2019**
(21) Anmeldenummer: 12786934.5
(22) Anmeldetag: 07.11.2012
(51) Int. Cl.: B25H 3/02, H02J 7/00

(54) **HANDWERKZEUGKOFFERHALTEVORRICHTUNG**
HOLDING DEVICE FOR THE CASING OF A HAND-HELD TOOL
DISPOSITIF DE FIXATION POUR MALLETTE D'OUTIL À MAIN

(30) Priorität: 22.11.2011 DE 102011086825; 31.07.2012 DE 102012213415
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE)
(86) Internationale Anmeldenummer: PCT/EP2012/072000
(87) Internationale Veröffentlichungsnummer: WO 2013/075941

(56) Entgegenhaltungen:
- EP-A1- 0 533 247
- EP-A1- 1 563 965
- KR-A- 20110 107 728
- US-B1- 6 218 796
- US-B1- 7 462 951

## Beschreibung

### Stand der Technik

Es ist bereits eine Handwerkzeugkofferhaltevorrichtung mit einem Haltevorrichtungsgehäuse, einem Kofferaufnahmebereich und einer Ladespule, die dazu vorgesehen ist, in einen in dem Kofferaufnahmebereich angeordneten Handwerkzeugkoffer eine Energie zu übertragen, vorgeschlagen worden. Ein Beispiel ist aus der KR1020110107728A bekannt.

### Offenbarung der Erfindung

Die Erfindung, wie in Anspruch 1 dargestellt, geht aus von einer Handwerkzeugkofferhaltevorrichtung mit einem Haltevorrichtungsgehäuse, einem Kofferaufnahmebereich und einer Ladespule, die dazu vorgesehen ist, in einen in dem Kofferaufnahmebereich angeordneten Handwerkzeugkoffer eine Energie zu übertragen.

Es wird vorgeschlagen, dass die Handwerkzeugkofferhaltevorrichtung eine Haltevorrichtung aufweist, die dazu vorgesehen ist, zumindest das Haltevorrichtungsgehäuse von dem Handwerkzeugkoffer unabhängig lösbar zu befestigen. Insbesondere soll unter einem "Haltevorrichtungsgehäuse" eine Einheit verstanden werden, die in einem betriebsbereiten Zustand zumindest die Ladespule und die Haltevorrichtung mechanisch verbindet. Vorzugsweise umschließt das Haltevorrichtungsgehäuse einen Innenraum, in dem vorteilhaft eine Ladeelektronik der Handwerkzeugkofferhaltevorrichtung angeordnet ist. Unter einer "Ladeelektronik" soll insbesondere eine Elektronik verstanden werden, die einen Ladezustand eines Handwerkzeugakkus überwacht und davon abhängig einen Ladevorgang des Handwerkzeugakkus steuert und/oder vorzugsweise regelt. Unter einem "Handwerkzeugakku" soll insbesondere ein Akku verstanden werden, der dazu vorgesehen ist, ein Handwerkzeug mit einer Energie zu versorgen. Vorzugsweise ist der Handwerkzeugakku insbesondere werkzeuglos lösbar mit dem Handwerkzeug verbunden. Alternativ oder zusätzlich könnte ein Handwerkzeugakku in das Handwerkzeug integriert sein. Insbesondere soll unter einem "Handwerkzeug" ein, dem Fachmann als sinnvoll erscheinendes tragbares Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät, ein Baustellenmessgerät und/oder ein Multifunktionswerkzeug verstanden werden. Unter "vorgesehen" soll insbesondere speziell programmiert, ausgelegt und/oder ausgestattet verstanden werden. Unter einem "Kofferaufnahmebereich" soll insbesondere ein Bereich verstanden werden, in dem zumindest der Handwerkzeugkoffer zumindest bei einem Ladevorgang eines in dem Handwerkzeugkoffer angeordneten Handwerkzeugakkus angeordnet ist. Vorzugsweise begrenzt ein Haltevorrichtungsgehäuse der Handwerkzeugkofferhaltevorrichtung den Kofferaufnahmebereich auf zumindest einer Seite. Insbesondere soll unter einem "Handwerkzeugkoffer" ein Koffer verstanden werden, der in einem geschlossenen Zustand einen Werkzeugaufnahmebereich stoßgeschützt, feuchtigkeitsgeschützt und/oder staubgeschützt begrenzt. Vorzugsweise begrenzt der Handwerkzeugkoffer den Werkzeugaufnahmebereich zumindest teilweise in Form eines Handwerkzeugakkus. Bevorzugt weist der Handwerkzeugkoffer zumindest ein Befestigungsmittel zur Befestigung eines Handwerkzeugs, eines Handwerkzeugs mit einem angeschlossenen Handwerkzeugakku und/oder besonders bevorzugt eines Handwerkzeugakkus auf. Vorzugsweise ist der Handwerkzeugkoffer magnetisch und/oder vorteilhaft elektrisch passiv. Insbesondere weist der Handwerkzeugkoffer keine Elektrik auf. Alternativ oder zusätzlich könnte der Handwerkzeugkoffer eine Ladespule und/oder vorteilhaft einen Magnetfeldleiter aufweisen, der die Energie empfängt und drahtgebunden und/oder magnetisch an einen Handwerkzeugakku weiterleitet. Vorzugsweise ist der Handwerkzeugkoffer entsprechend dem in der Druckschrift DE 10 2008 058 007 B3 vorgeschlagenen Handwerkzeugkoffer ausgebildet, weist jedoch einen Handwerkzeugaufnahmebereich und/oder einen Handwerkzeugakkuaufnahmebereich auf, der dazu vorgesehen ist, bei einem Ladevorgang einen induktiv geladenen Handwerkzeugakku aufzunehmen. Insbesondere soll unter dem Begriff "übertragen" verstanden werden, dass die Ladespule eine elektrische Energie mittels eines magnetischen Wechselfelds an die in dem Kofferaufnahmebereich angeordnete Ladespule sendet. Vorzugsweise ist die in dem Kofferaufnahmebereich angeordnete Ladespule Teil des Handwerkzeugkoffers und/oder besonders bevorzugt Teil eines in dem Handwerkzeugkoffer angeordneten Handwerkzeugakkus. Unter einer "Haltevorrichtung" soll insbesondere eine Vorrichtung verstanden werden, die in zumindest einem Betriebszustand eine mechanisch feste Verbindung zwischen zwei Einheiten herstellt. Vorzugsweise ist die Haltevorrichtung dazu vorgesehen, das Haltevorrichtungsgehäuse an einem Einsatzort zu befestigen, beispielsweise an einem Arbeitsplatz, an einer Wand, in einem Fahrzeug und/oder an einem anderen, dem Fachmann als sinnvoll erscheinendem Objekt. Insbesondere soll unter der Wendung "von dem Handwerkzeugkoffer unabhängig" verstanden werden, dass eine Anordnung und/oder ein Vorhandensein des Handwerkzeugkoffers in dem Kofferaufnahmebereich keinen Einfluss auf die mechanisch feste Verbindung der Haltevorrichtung hat. Insbesondere stellt die Haltevorrichtung eine Verbindung zu einem von dem Handwerkzeugkoffer, in den die Energie übertragen wird, verschiedenen Objekt her, beispielsweise einem anderen Handwerkzeugkoffer, einem Fahrzeug und/oder einem Regal. Insbesondere soll unter dem Begriff "lösbar" verstanden werden, dass die Haltevorrichtung den Handwerkzeugkoffer in einem Zustand befestigt und diese Befestigung in einem anderen Zustand von einem Bediener zerstörungsfrei und/oder reversibel trennbar ist. Durch die erfindungsgemäße Ausgestaltung der Handwerkzeugkofferhaltevorrichtung ist eine besonders flexible Befestigung möglich. Insbesondere kann die Handwerkzeugkofferhaltevorrichtung komfortabel an unterschiedlichen Einsatzorten und unter verschiedenen Einsatzbedingungen befestigt werden.

Weiterhin wird vorgeschlagen, dass die Handwerkzeugkofferhaltevorrichtung eine weitere Haltevorrichtung umfasst, die dazu vorgesehen ist, den Handwerkzeugkoffer lösbar in dem Kofferaufnahmebereich zu befestigen, wodurch konstruktiv einfach eine besonders stabile, benutzerfreundliche und insbesondere selbsttätig schließende Befestigung des Handwerkzeugkoffers in dem Kofferaufnahmebereich möglich ist. Vorzugsweise ist die weitere Haltevorrichtung dazu vorgesehen, in zumindest einem Betriebszustand eine Bewegung des Handwerkzeugkoffers aus dem Kofferaufnahmebereich heraus zu verhindern. Bevorzugt verhindert die Haltevorrichtung in zumindest einem Betriebszustand eine Bewegung des Handwerkzeugkoffers unabhängig von einer Richtung der Bewegung. Vorzugsweise befestigt die Haltevorrichtung den Handwerkzeugkoffer zumindest bei einem Ladevorgang kraftschlüssig und/oder vorteilhaft formschlüssig. Vorzugsweise sind die Haltevorrichtungen auf einander abgewandten Seiten des Haltevorrichtungsgehäuses angeordnet.

In einer weiteren Ausgestaltung wird vorgeschlagen, dass die Haltevorrichtungen zueinander korrespondierend ausgebildet sind, wodurch mehrere Handwerkzeugkoffer und Handwerkzeugkofferhaltevorrichtungen vorteilhaft gestapelt werden können. In diesem Zusammenhang soll unter "korrespondierend" insbesondere verstanden werden, dass eine Haltevorrichtung einer ersten Handwerkzeugkofferhaltevorrichtung, die dazu vorgesehen ist, zumindest das Haltevorrichtungsgehäuse von dem Handwerkzeugkoffer unabhängig lösbar zu befestigen, und eine Haltevorrichtung einer zweiten Handwerkzeugkofferhaltevorrichtung, die dazu vorgesehen ist, den Handwerkzeugkoffer lösbar in dem Kofferaufnahmebereich zu befestigen, miteinander verbindbar ausgebildet sind.

Des Weiteren wird vorgeschlagen, dass zumindest eine der Haltevorrichtungen werkzeuglos lösbar ausgebildet ist, wodurch eine besonders komfortable Entnahme des Handwerkzeugkoffers aus dem Kofferaufnahmebereich möglich ist. Vorzugsweise sind beide Haltevorrichtungen werkzeuglos lösbar ausgebildet. Unter der Wendung "werkzeuglos lösbar" soll insbesondere verstanden werden, dass eine Verbindung der Haltevorrichtung von einem Bediener mit der Hand lösbar ausgebildet ist. Vorzugsweise weist die Haltevorrichtung zumindest ein Bedienelement auf, das bei einer Betätigung durch einen Bediener eine Befestigung löst.

Ferner wird vorgeschlagen, dass zumindest die weitere Haltevorrichtung zumindest ein Haltemittel aufweist, das dazu vorgesehen ist, den Handwerkzeugkoffer zu verrasten, wodurch konstruktiv einfach eine besonders stabile, benutzerfreundliche und insbesondere selbsttätig schließende Befestigung möglich ist. Unter einem "Haltemittel" soll insbesondere ein Mittel verstanden werden, das in zumindest einem Betriebszustand zur Befestigung des Werkzeugkoffers eine Kraft direkt auf den Werkzeugkoffer bewirkt. Vorzugsweise ist das Haltemittel korrespondierend zu einem und/oder gemäß einem in der Druckschrift DE 10 2008 058 007 B3 vorgeschlagenen Haltemittel ausgebildet. Insbesondere soll unter "verrasten" verstanden werden, dass ein Haltemittel bei einem Befestigungsvorgang des Handwerkzeugkoffers elastisch ausgelenkt wird, um anschließend durch eine auf das Haltemittel wirkende Kraft hinter einem korrespondierenden Haltemittel einzuhaken. Vorzugsweise ist das elastisch auslenkbare Haltemittel an dem Handwerkzeugkoffer angeordnet und das korrespondierende Haltemittel ist an der Handwerkzeugkofferhaltevorrichtung angeordnet.

Zudem wird vorgeschlagen, gemäß Anspruch 1, dass die weitere Haltevorrichtung zwei Haltemittel aufweist, die auf zwei einander gegenüberliegenden Seiten des Kofferaufnahmebereichs angeordnet sind, wodurch konstruktiv einfach eine besonders zuverlässige Befestigung möglich ist. Unter der Wendung "auf zwei einander gegenüberliegenden Seiten" soll insbesondere verstanden werden, dass die Haltemittel auf einer Geraden liegen, die den Kofferaufnahmebereich schneidet und die zumindest im Wesentlichen parallel zu einer Seite des Kofferaufnahmebereichs ausgerichtet ist. Vorzugsweise weisen beide Haltevorrichtungen je zwei Haltemittel auf, die insbesondere korrespondierend zueinander ausgebildet sind.

Des Weiteren wird vorgeschlagen, dass die Haltevorrichtungen auf einander abgewandten Seiten des Haltevorrichtungsgehäuses angeordnet sind, wodurch ein vorteilhaftes Stapeln möglich ist. Vorzugsweise sind die Haltevorrichtungen dazu vorgesehen, auf einander gegenüberliegenden Seiten insbesondere einen Handwerkzeugkoffer zu befestigen.

In einer vorteilhaften Ausbildung der Erfindung wird vorgeschlagen, dass die Handwerkzeugkofferhaltevorrichtung eine Ladeelektronik umfasst, die dazu vorgesehen ist, einen Ladevorgang zumindest zu steuern, wodurch auf eine in dem Handwerkzeugkoffer angeordnete Ladeelektronik verzichtet werden kann. Dadurch ist eine besonders einfache Ausgestaltung des Handwerkzeugkoffers möglich. Unter einer "Ladeelektronik" soll insbesondere eine Elektronik verstanden werden, die einen Ladezustand eines Handwerkzeugakkus überwacht und davon abhängig einen Ladevorgang des Handwerkzeugakkus steuert und/oder vorzugsweise regelt.

Des Weiteren wird vorgeschlagen, dass eine Haupterstreckung des Haltevorrichtungsgehäuses im Wesentlichen senkrecht zu einer Wirkrichtung der Ladespule ausgerichtet ist, wodurch eine besonders geringe Baugröße erreicht werden kann. Unter einer "Haupterstreckung" des Haltevorrichtungsgehäuses soll insbesondere eine Ebene verstanden werden, in der das Haltevorrichtungsgehäuse eine maximale Erstreckung aufweist und die vorzugsweise parallel zu einer Außenseite des Haltevorrichtungsgehäuses ausgerichtet ist. Vorzugsweise ist die Haupterstreckung parallel zu einer Außenseite des Haltevorrichtungsgehäuses ausgerichtet, die dem Kofferaufnahmebereich zugewandt ist. Insbesondere soll unter einer "Wirkrichtung" eine Richtung verstanden werden, in die die Ladespule bei einem Ladevorgang eine Energie überträgt.

Zudem wird vorgeschlagen, dass die Handwerkzeugkofferhaltevorrichtung eine Kühlvorrichtung umfasst, die dazu vorgesehen ist, eine bei einem Ladevorgang entstehende Abwärme zumindest teilweise zu kompensieren, wodurch in einem vorteilhaft großen Umgebungstemperaturbereich der Ladevorgang durchgeführt werden kann. Insbesondere reduziert die Kühlvorrichtung eine Wärmeübertragung in Richtung des Handwerkzeugakkus. Vorzugsweise ist die Kühlvorrichtung dazu vorgesehen, die Abwärme mittels Wärmestrahlung, Wärmeleitung und/oder Konvektion abzuführen. Besonders bevorzugt weist die Kühlvorrichtung ein die Abwärme kompensierendes Latentwärmespeicherelement auf. Unter einem "Latentwärmespeicherelement" soll insbesondere ein Element verstanden werden, das zumindest ein Latentwärmespeichermaterial und/oder ein Latentwärmespeichermaterialgemisch mit zumindest einer Phasengrenze aufweist, bei deren Überschreiten das Latentwärmespeichermaterial je Masseneinheit eine Wärmemenge aufnimmt oder abgibt, die zumindest fünfmal, insbesondere zumindest zehnmal, vorteilhaft zumindest 20-mal, vorzugsweise zumindest 40-mal, so groß ist wie eine Wärmemenge, die das gleiche Latentwärmespeichermaterial bei einer Erwärmung um 1 K abseits der Phasengrenze aufnimmt. Insbesondere beträgt die Wärmemenge zumindest 60 kJ/kg, insbesondere zumindest 100 kJ/kg, vorteilhaft zumindest 130 kJ/kg, vorzugsweise zumindest 150 kJ/kg. Unter einer "Phasengrenze" soll insbesondere eine in der Regel druckabhängige Grenztemperatur verstanden werden. Vorzugsweise ist die Grenztemperatur der zumindest einen Phasengrenze des zumindest einen Latentwärmespeichermaterials, zumindest bei einem Normaldruck von 1013 hPa, eine Temperatur größer als -10 °C, insbesondere größer als -5 °C, vorteilhaft größer als 0°C, vorzugsweise größer als 5 °C. Vorzugsweise ist die Grenztemperatur der zumindest einen Phasengrenze zumindest bei Normaldruck kleiner als 60 °C, insbesondere kleiner als 55 °C, vorteilhaft kleiner als 50 °C, vorzugsweise kleiner als 45 °C. Vorzugsweise ist das Latentwärmespeicherelement dazu vorgesehen, bei umgekehrtem Überschreiten der Phasengrenze die aufgenommene bzw. abgegebene Wärme in gleichem Maße wieder abzugeben bzw. aufzunehmen. Vorzugsweise ist die Phasengrenze beliebig häufig reversibel überschreitbar. Vorzugsweise ist das Latentwärmespeicherelement dazu vorgesehen, bei Überschreiten zumindest einer Phasengrenze eine Wärme von zumindest 5 kJ, insbesondere zumindest 10 kJ, vorteilhaft zumindest 20 kJ, vorzugsweise zumindest 30 kJ aufzunehmen. Insbesondere findet an der Phasengrenze ein Übergang zwischen einem flüssigen Zustand und einem festen Zustand statt.

Ferner wird ein System mit einer erfindungsgemäßen Handwerkzeugkofferhaltevorrichtung und zumindest einem Handwerkzeugkoffer vorgeschlagen, der zumindest eine zu der Haltevorrichtung der Handwerkzeugkofferhaltevorrichtung korrespondierende Haltevorrichtung aufweist, wodurch die Handwerkzeugkofferhaltevorrichtung vorteilhaft mit verschiedenen Handwerkzeugkoffern verbindbar ist. In diesem Zusammenhang soll unter "korrespondierend" insbesondere verstanden werden, dass die Haltevorrichtung des Handwerkzeugkoffers dazu vorgesehen ist, mit der Haltevorrichtung der Handwerkzeugkofferhaltevorrichtung eine lösbare mechanische Verbindung einzugehen. Vorzugsweise weist der Handwerkzeugkoffer neben der ersten Haltevorrichtung eine zweite Haltevorrichtung auf, die zu einer ersten Haltevorrichtung eines Handwerkzeugkoffers korrespondierend ausgebildet ist, wodurch mehrere Handwerkzeugkoffer mittels der Haltevorrichtungen verbunden, vorteilhaft gestapelt und insbesondere transportiert werden können. Vorzugsweise ist die zweite Haltevorrichtung des Handwerkzeugkoffers identisch mit der Haltevorrichtung der Handwerkzeugkofferhaltevorrichtung ausgebildet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einem Handwerkzeugkoffer und einer Handwerkzeugkofferhaltevorrichtung, die eine erste Haltevorrichtung und eine weitere, zweite Haltevorrichtung aufweist, in einer Seitenansicht,
- Fig. 2: das System aus Figur 1 in einer Frontalansicht,
- Fig. 3: das System aus Figur 1 mit zwei Handwerkzeugakkus in einer perspektivischen Darstellung, wobei die Handwerkzeugkofferhaltevorrichtung auf einer Deckelseite des Handwerkzeugkoffers angeordnet ist,
- Fig. 4: ein System aus mehreren Handwerkzeugkoffern und mehreren Handwerkzeugkofferhaltevorrichtungen, wobei die Handwerkzeugkoffer und die Handwerkzeugkofferhaltevorrichtungen abwechselnd gestapelt sind, und
- Fig. 5: ein System aus mehreren Handwerkzeugkoffern, mehreren Handwerkzeugkofferhaltevorrichtungen und einem Systemrack.

### Beschreibung des Ausführungsbeispiels

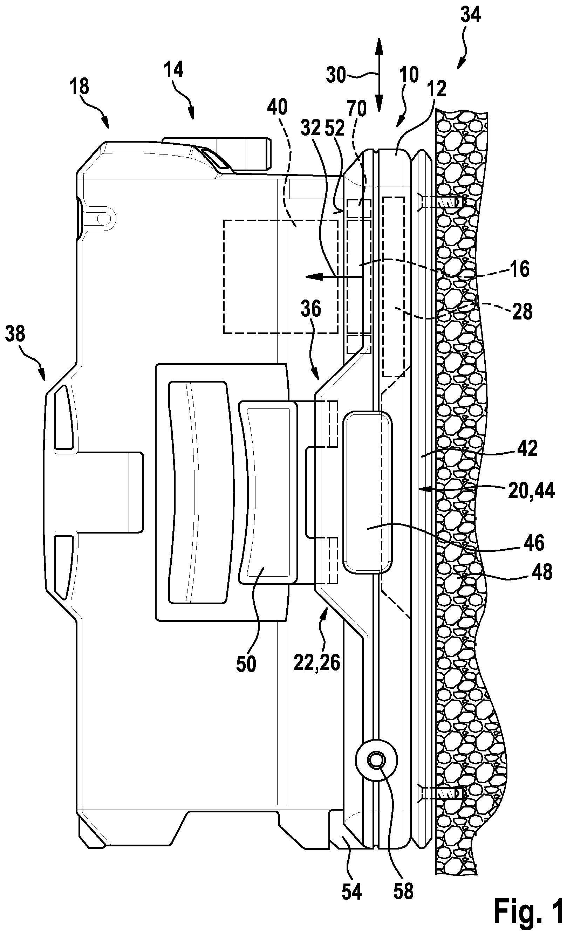

Die Figuren 1 bis 5 zeigen verschiedene Anwendungen eines erfindungsgemäßen Systems 34 wenigstens mit einer Handwerkzeugkofferhaltevorrichtung 10, einem Handwerkzeugkoffer 18, einem Handwerkzeugakku 40 und einem Befestigungsmittel 42 in unterschiedlichen Zusammenstellungen. Die Handwerkzeugkofferhaltevorrichtung 10 weist ein Haltevorrichtungsgehäuse 12, einen Kofferaufnahmebereich 14, zwei Ladespulen 16, eine erste Haltevorrichtung 20, eine weitere, zweite Haltevorrichtung 22 und eine Ladeelektronik 28 auf. Das Haltevorrichtungsgehäuse 12 ist im Wesentlichen brettförmig ausgebildet. Das Haltevorrichtungsgehäuse 12 verbindet die Ladespule 16 und die zwei Haltevorrichtungen 20, 22 miteinander. Die Ladeelektronik 28 ist in einem Inneren des Haltevorrichtungsgehäuses 12 angeordnet. Die Ladeelektronik 28 regelt bei einem Ladevorgang eine Energie, die zumindest eine der Ladespulen 16 an den Handwerkzeugakku 40 überträgt. Die Ladespule 16 weist eine Wirkrichtung 32 auf, die senkrecht zu einer Haupterstreckung 30 des Haltevorrichtungsgehäuses 12 ist.

Die erste Haltevorrichtung 20 der Handwerkzeugkofferhaltevorrichtung 10 befestigt das Haltevorrichtungsgehäuse 12 in zumindest einem in Figur 1 dargestellten Betriebszustand von dem Handwerkzeugkoffer 18 unabhängig lösbar an dem Befestigungsmittel 42. Die erste Haltevorrichtung 20 der Handwerkzeugkofferhaltevorrichtung 10 verrastet in einem Betriebszustand mit einer Haltevorrichtung 44 des Befestigungsmittels 42. Die Handwerkzeugkofferhaltevorrichtung 10 weist Bedienelemente 46 auf, die dazu vorgesehen sind, bei einer werkzeuglosen Betätigung durch den Bediener eine Verbindung zwischen der Handwerkzeugkofferhaltevorrichtung 10 und dem Befestigungsmittel 42 zu lösen. Das Befestigungsmittel 42 ist dazu vorgesehen, an einem Einsatzort der Handwerkzeugkofferhaltevorrichtung 10, beispielsweise an einer Wand 48, in einem Fahrzeug, an einer Werkbank und/oder einem anderen, dem Fachmann als sinnvoll erscheinenden Ort befestigt zu werden, wodurch die Handwerkzeugkofferhaltevorrichtung 10 vorteilhaft an unterschiedlichen Orten befestigt werden kann. In Figur 1 ist dargestellt, dass das Befestigungsmittel 42 mit der Wand 48 verschraubt ist.

Die weitere, zweite Haltevorrichtung 22 der Handwerkzeugkofferhaltevorrichtung 10 ist dazu vorgesehen, den Handwerkzeugkoffer 18 lösbar in dem Kofferaufnahmebereich 14 zu befestigen. Dazu verbindet die zweite Haltevorrichtung 22 der Handwerkzeugkofferhaltevorrichtung 10 in zumindest einem Betriebszustand das Haltevorrichtungsgehäuse 12 lösbar mit einer ersten Haltevorrichtung 36 des Handwerkzeugkoffers 18. Die erste Haltevorrichtung 36 des Handwerkzeugkoffers 18 weist Bedienelemente 50 auf, die dazu vorgesehen sind, bei einer werkzeuglosen Betätigung durch den Bediener eine Verbindung zwischen der Handwerkzeugkofferhaltevorrichtung 10 und dem Handwerkzeugkoffer 18 zu lösen. Die Haltevorrichtungen 20, 22 der Handwerkzeugkofferhaltevorrichtung 10 sind auf einander abgewandten Seiten des Haltevorrichtungsgehäuses 12 angeordnet. Eine zweite Haltevorrichtung 38 des Handwerkzeugkoffers 18 ist auf einer der ersten Haltevorrichtung 36 abgewandten Seite des Handwerkzeugkoffers 18 angeordnet.

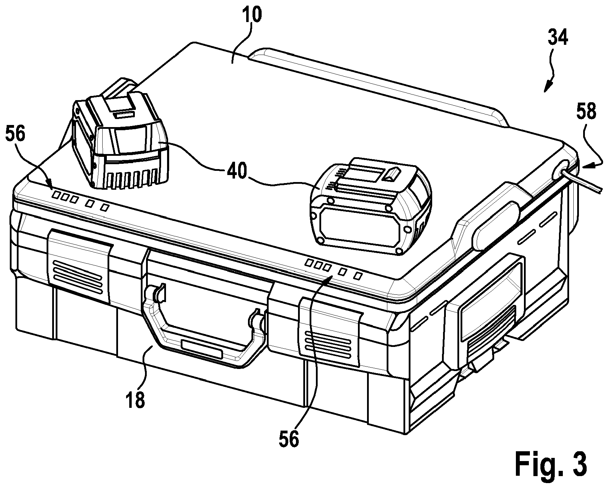

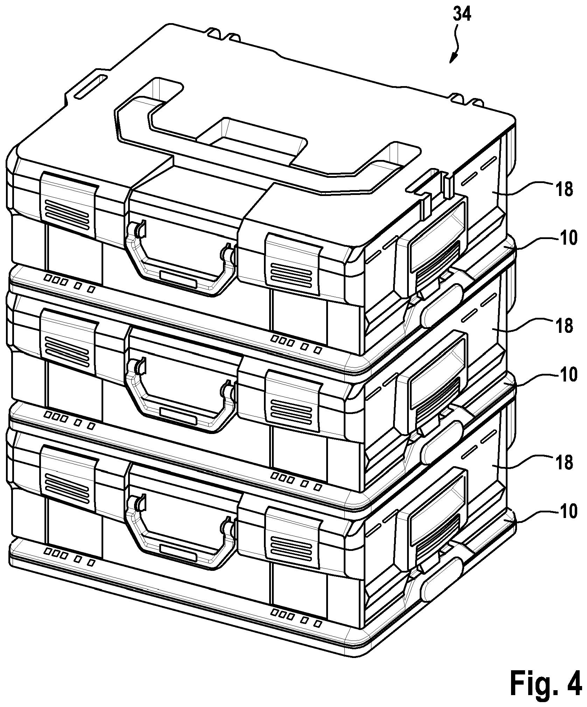

Die erste Haltevorrichtung 20 der Handwerkzeugkofferhaltevorrichtung 10 ist korrespondierend zu der zweiten Haltevorrichtung 22 der Handwerkzeugkofferhaltevorrichtung 10 und der zweiten Haltevorrichtung 38 des Handwerkzeugkoffers 18 ausgebildet. Die zweite Haltevorrichtung 22 der Handwerkzeugkofferhaltevorrichtung 10 ist korrespondierend zu der ersten Haltevorrichtung 20 der Handwerkzeugkofferhaltevorrichtung 10 und der ersten Haltevorrichtung 36 des Handwerkzeugkoffers 18 ausgebildet. Somit sind Handwerkzeugkofferhaltevorrichtungen 10 und Handwerkzeugkoffer 18, wie in Figur 3 und 4 gezeigt, lösbar verbunden und stapelbar.

Die Haltevorrichtungen 20, 22, 36, 38, 44 weisen jeweils zwei Haltemittel 24, 26 auf. Die zwei Haltemittel 24, 26 sind jeweils von einander beabstandet angeordnet. Die Haltemittel 24, 26 der zweiten Haltevorrichtung 22 der Handwerkzeugkofferhaltevorrichtung 10 sind an zwei einander gegenüberliegenden Seiten des Kofferaufnahmebereichs 14 angeordnet. Die zwei Haltemittel 24, 26 sind jeweils dazu vorgesehen, mit einem Haltemittel 24, 26 einer korrespondierenden Haltevorrichtung 20, 22, 36, 38, 44 zu verrasten. Die Haltemittel 24, 26 der ersten Haltevorrichtungen 20, 36 sind als Rasthaken ausgebildet. Die Haltemittel 24, 26 der zweiten Haltevorrichtungen 22, 38 und die Haltevorrichtung 44 des Befestigungsmittels 42 sind als Aussparungen ausgebildet. Die Haltemittel 24, 26 der ersten Haltevorrichtungen 20, 36 verrasten mit einer Bewegung nach außen. Die Haltemittel 24, 26 der ersten Haltevorrichtungen 20, 36 weisen nicht näher dargestellte Eindrückschrägen auf, die die Haltemittel 24, 26 vor einem Verrasten selbsttätig eindrücken, und zwar sowohl bei einer Einführbewegung parallel zu der Haupterstreckung 30 der Handwerkzeugkofferhaltevorrichtung 10 als auch bei einer Bewegung senkrecht zu der Haupterstreckung 30 der Handwerkzeugkofferhaltevorrichtung 10.

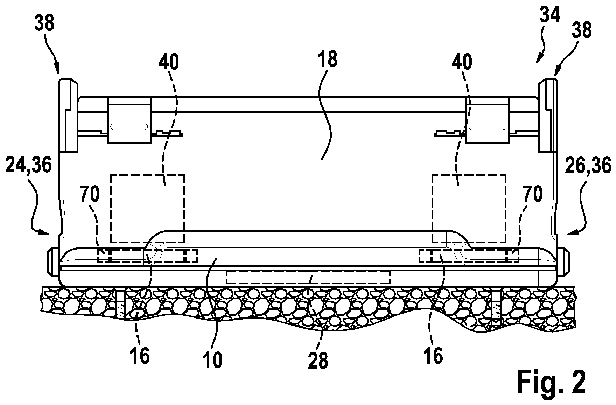

Bei einem Ladevorgang überträgt zumindest eine der Ladespulen 16 eine Energie auf einen der Handwerkzeugakkus 40, der in dem Kofferaufnahmebereich 14 angeordnet ist. In den Figuren 1 und 2 ist dargestellt, dass die Ladespulen 16 eine Energie durch eine Wandung des Handwerkzeugkoffers 18 in den in dem Kofferaufnahmebereich 14 angeordneten Handwerkzeugkoffer 18 übertragen. Zudem können die Ladespulen 16, wie in der Figur 3 gezeigt, eine Energie an Handwerkzeugakkus 40 übertragen, die auf einer Oberfläche 52 der Handwerkzeugkofferhaltevorrichtung 10 aufliegen. Dazu weist die Oberfläche 52 nicht näher dargestellte Markierungen auf, die den Bediener bei einer Positionierung der Handwerkzeugakkus 40 unterstützen. Alternativ oder zusätzlich könnte eine Oberfläche einer Handwerkzeugkofferhaltevorrichtung Haltemittel zur Befestigung eines Handwerkzeugakkus aufweisen.

Das Haltevorrichtungsgehäuse 12 weist einen Stützbereich 54 auf, der bei einer senkrechten Montage der Handwerkzeugkofferhaltevorrichtung 10 einen Teil einer Gewichtskraft des Handwerkzeugkoffers 18 abstützt. Die Handwerkzeugkofferhaltevorrichtung10 weist Ausgabeeinheiten 56 auf, die einen Ladezustand der Handwerkzeugakkus 40 anzeigen. Des Weiteren weist die Handwerkzeugkofferhaltevorrichtung 10 einen Energieeingang 58 auf, der bei einem Ladevorgang eine an den Handwerkzeugakku 40 übertragene Energie aufnimmt.

Die Handwerkzeugkofferhaltevorrichtung 10 umfasst eine Kühlvorrichtung 70. Die Kühlvorrichtung 70 kompensiert eine bei einem Ladevorgang entstehende Abwärme teilweise. Die Kühlvorrichtung 70 ist als ein die Abwärme kompensierendes Latentwärmespeicherelement ausgebildet. Die Kühlvorrichtung 70 ist an die Ladespule angrenzend angeordnet. Die Kühlvorrichtung 70 umschließt die Ladespule 16 der Handwerkzeugkofferhaltevorrichtung 10 auf einer Ebene senkrecht zu der Wirkrichtung 32 der Ladespule 16.

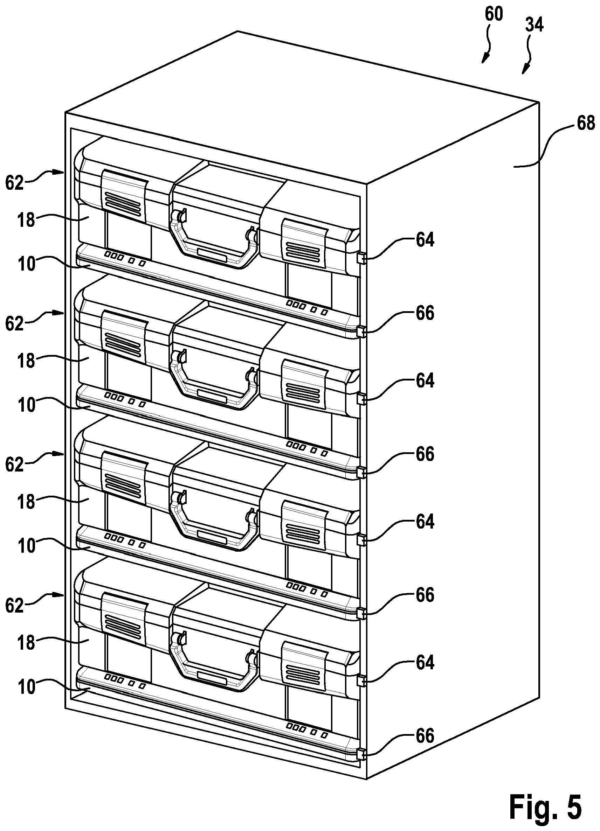

Figur 5 zeigt das System 34 der Figuren 1 bis 4 und zusätzlich ein Systemrack 60, das dazu vorgesehen ist, mehrere Handwerkzeugkofferhaltevorrichtungen 10 zu befestigen. Das Systemrack 60 weist mehrere Aufnahmebereiche 62 für jeweils eine Handwerkzeugkofferhaltevorrichtung 10 und einen Handwerkzeugkoffer 18 auf. Das Systemrack 60 weist Bedienelemente 64 auf, die dazu vorgesehen sind, eine Verbindung zwischen einer der Handwerkzeugkofferhaltevorrichtungen 10 und einem der Handwerkzeugkoffer 18 zu lösen. Des Weiteren weist das Systemrack 60 Bedienelemente 66 auf, die dazu vorgesehen sind, eine Verbindung zwischen einer der Handwerkzeugkofferhaltevorrichtungen 10 und einem Gehäuse 68 des Systemracks 60 zu lösen.

## Patentansprüche

1. Handwerkzeugkofferhaltevorrichtung mit einem Haltevorrichtungsgehäuse (12), einem Kofferaufnahmebereich (14), mit einer Ladespule (16), die dazu vorgesehen ist, in einen in dem Kofferaufnahmebereich (14) angeordneten Handwerkzeugkoffer (18) eine Energie zu übertragen, mit einer Haltevorrichtung (20), die dazu vorgesehen ist, zumindest das Haltevorrichtungsgehäuse (12) von dem Handwerkzeugkoffer (18) unabhängig lösbar zu befestigen, und mit einer weiteren Haltevorrichtung (22), die dazu vorgesehen ist, den Handwerkzeugkoffer (18) lösbar in dem Kofferaufnahmebereich (14) zu befestigen, **dadurch gekennzeichnet, dass** die weitere Haltevorrichtung (22) zwei Haltemittel (24, 26) aufweist, die auf zwei einander gegenüberliegenden Seiten des Kofferaufnahmebereichs (14) angeordnet sind.

2. Handwerkzeugkofferhaltevorrichtung nach einem der vorhergehenden Ansprüche, **dadurch gekennzeichnet, dass** die Haltevorrichtungen (20, 22) zueinander korrespondierend ausgebildet sind.

3. Handwerkzeugkofferhaltevorrichtung nach einem der vorhergehenden Ansprüche, **dadurch gekennzeichnet, dass** zumindest eine der Haltevorrichtungen (20, 22), werkzeuglos lösbar ausgebildet ist.

4. Handwerkzeugkofferhaltevorrichtung nach einem der vorhergehenden Ansprüche, **dadurch gekennzeichnet, dass** zumindest die weitere Haltevorrichtung (22) zumindest ein Haltemittel (24, 26) aufweist, das dazu vorgesehen ist, den Handwerkzeugkoffer (18) zu verrasten.

5. Handwerkzeugkofferhaltevorrichtung nach einem der vorhergehenden Ansprüche, **dadurch gekennzeichnet, dass** die Haltevorrichtungen (20, 22) auf einander abgewandten Seiten des Haltevorrichtungsgehäuses (12) angeordnet sind.

6. Handwerkzeugkofferhaltevorrichtung nach einem der vorhergehenden Ansprüche, **gekennzeichnet durch** eine Ladeelektronik (28), die dazu vorgesehen ist, einen Ladevorgang zumindest zu steuern.

7. Handwerkzeugkofferhaltevorrichtung nach einem der vorhergehenden Ansprüche, **dadurch gekennzeichnet, dass** eine Haupterstreckung (30) des Haltevorrichtungsgehäuses (12) im Wesentlichen senkrecht zu einer Wirkrichtung (32) der Ladespule (16) ausgerichtet ist.

8. Handwerkzeugkofferhaltevorrichtung nach einem der vorhergehenden Ansprüche, **gekennzeichnet durch** eine Kühlvorrichtung (70), die dazu vorgesehen ist, eine bei einem Ladevorgang entstehende Abwärme zumindest teilweise zu kompensieren.

9. System mit einer Handwerkzeugkofferhaltevorrichtung (10) nach einem der vorhergehenden Ansprüche und mit zumindest einem Handwerkzeugkoffer (18), der zumindest eine zu der Haltevorrichtung (20, 22) der Handwerkzeugkofferhaltevorrichtung (10) korrespondierende Haltevorrichtung (36, 38) aufweist.

## Claims

1. Hand-tool-case retaining device having a retaining-device housing (12), having a case-accommodating region (14), having a charging coil (16), which is provided to transmit energy to the hand-tool-case (18) arranged in the case-accommodating region (14), having a retaining device (20) provided to fasten at least the retaining-device housing (12) in a releasable manner independently of the hand-tool case (18), and having a further retaining device (22), which is provided to fasten a hand-tool case (18) in a releasable manner in the case-accommodating region (14), **characterized in that** the further retaining device (22) has two retaining means (24, 26) which are arranged on two opposite sides of the case-accommodating region (14).

2. Hand-tool-case retaining device according to one of the preceding claims, **characterized in that** the retaining devices (20, 22) are designed to correspond to one another.

3. Hand-tool-case retaining device according to either of the preceding claims, **characterized in that** at least one of the retaining devices (20, 22) is designed for release without tools being required.

4. Hand-tool-case retaining device according to one of the preceding claims, **characterized in that** at least the further retaining device (22) has at least one retaining means (24, 26) which is provided to latch the hand-tool case (18).

5. Hand-tool-case retaining device according to one of the preceding claims, **characterized in that** the retaining devices (20, 22) are arranged on remote sides of the retaining-device housing (12).

6. Hand-tool-case retaining device according to one of the preceding claims, **characterized by** a charging-electronics unit (28), which is provided at least to control a charging operation.

7. Hand-tool-case retaining device according to one of the preceding claims, **characterized in that** a main extent (30) of the retaining-device housing (12) is oriented essentially perpendicularly to a direction of action (32) of the charging coil (16).

8. Hand-tool-case retaining device according to one of the preceding claims, **characterized by** a cooling device (70), which provides at least partial compensation for waste heat which is produced during a charging operation.

9. System having a hand-tool-case retaining device (10) according to one of the preceding claims and having at least one hand-tool case (18) which has at least one retaining device (36, 38) corresponding to the retaining device (20, 22) of the hand-tool-case retaining device (10).

## Revendications

1. Dispositif de maintien de coffre d'outil manuel, doté d'un boîtier de dispositif de maintien (12), d'une zone de logement de coffre (14), doté d'une bobine de charge (16), laquelle est prévue pour transmettre une énergie à un coffre d'outil manuel (18) agencé dans la zone de logement de coffre (14), doté d'un dispositif de maintien (20), lequel est prévu pour fixer au moins le boîtier de dispositif de maintien (12). de manière indépendamment amovible du coffre d'outil manuel (18), et doté d'un dispositif de maintien supplémentaire (22), lequel est prévu pour fixer le coffre d'outil manuel (18) de manière amovible dans la zone de logement de coffre (14), **caractérisé en ce que** le dispositif de maintien supplémentaire (22) comporte deux moyens de maintien (24, 26), lesquels sont agencés sur deux côtés opposés l'un à l'autre de la zone de logement de coffre (14).

2. Dispositif de maintien de coffre d'outil manuel selon l'une des revendications précédentes, **caractérisé en ce que** les dispositifs de maintien (20, 22) sont réalisés pour correspondre l'un à l'autre.

3. Dispositif de maintien de coffre d'outil manuel selon l'une des revendications précédentes, **caractérisé en ce qu'**au moins un des dispositifs de maintien (20, 22) est réalisé pour être amovible sans outil.

4. Dispositif de maintien de coffre d'outil manuel selon l'une des revendications précédentes, **caractérisé en ce qu'**au moins le dispositif de maintien supplémentaire (22) comporte au moins un moyen de maintien (24, 26), lequel est prévu pour accrocher le coffre d'outil manuel (18).

5. Dispositif de maintien de coffre d'outil manuel selon l'une des revendications précédentes, **caractérisé en ce que** les dispositifs de maintien (20, 22) sont agencés sur des côtés du boîtier de dispositif de maintien (12) se détournant l'un de l'autre.

6. Dispositif de maintien de coffre d'outil manuel selon l'une des revendications précédentes, **caractérisé par** une électronique de charge (28), laquelle est prévue pour au moins piloter une opération de charge.

7. Dispositif de maintien de coffre d'outil manuel selon l'une des revendications précédentes, **caractérisé en ce qu'**une extension principale (30) du boîtier de dispositif de maintien (12) est orientée de manière essentiellement perpendiculaire par rapport à une direction d'action (32) de la bobine de charge (16).

8. Dispositif de maintien de coffre d'outil manuel selon l'une des revendications précédentes, **caractérisé par** un dispositif de refroidissement (70), lequel est prévu pour compenser au moins partiellement un dégagement de chaleur se produisant lors d'une opération de charge.

9. Système doté d'un dispositif de maintien de coffre d'outil manuel (10) selon l'une des revendications précédentes et d'au moins un coffre d'outil manuel (18), lequel comporte au moins un dispositif de maintien (36, 38) correspondant au dispositif de maintien (20, 22) du dispositif de maintien de coffre d'outil manuel (10).
